Europäisches Patentamt

European Patent Office

Office européen des brevets

(11) Publication number: **0 106 920**
**B1**

## (12) EUROPEAN PATENT SPECIFICATION

(45) Date of publication of patent specification: **09.07.86**

(21) Application number: **82305482.0**

(22) Date of filing: **14.10.82**

(51) Int. Cl.⁴: **E 04 H 15/00, A 01 G 9/24**

(54) Canopy system for a building structure.

(43) Date of publication of application:
**02.05.84 Bulletin 84/18**

(45) Publication of the grant of the patent:
**09.07.86 Bulletin 86/28**

(84) Designated Contracting States:
**AT BE CH DE FR GB IT LI LU NL SE**

(56) References cited:
**WO-A-81/00126**
**FR-A-2 117 339**
**FR-A-2 347 498**

(73) Proprietor: **116736 (Canada) Inc.**
**31, Sunrise Crescent**
**Pointe Claire Quebec (CA)**

(72) Inventor: **Nelson, Richard C.**
**31 Sunrise Crescent**
**Point Claire Quebec (CA)**

(74) Representative: **Heath, Derek James et al**
**Bromhead & Co. 30 Cursitor Street Chancery Lane**
**London EC4A 1LT (GB)**

## Description

The present invention relates to a canopy system for a building structure comprising at least one tubular panel formed of flexible impermeable sheet material, the panel including an open-ended hollow sleeve with a top exterior sheet and a bottom interior sheet which extend between spaced-apart support means one of which is at a higher elevation .than the other.

Structures having flexible roof canopies have been made in the past. The majority of these have a canopy supported by pressure within the building or structure. Other canopy systems include awnings and tents which stretch across a frame or building structure. Transparent roof canopies have been considered for structures such as greenhouses and the like, but these are usually temporary or non-permanent buildings and are designed to allow light and the ultra-violet radiation from the sun inside the building.

In WO—A—8 100 126 there is shown a canopy system of the construction outlined above. However, the tubular sheet is supported at each side by a single rigid core so that the spacing between the two sheets has to be small if the size of the core is not to be unmanageable.

Similarly, FR—A—2 117 339 shows a series of sealed pillow-like objects which have a rope connection to a support structure at each end. The upper and lower surfaces of these pillow-like objects are not, therefore, held in a spaced-apart disposition at those ends.

The present invention provides a novel canopy system wherein the top exterior sheet and the bottom interior sheet of the panel (or each panel) are spaced well apart at the sides of the panel to facilitate control of the atmosphere between these two sheets, and according to the invention the canopy system is characterised by the fact that the sleeve has two side walls which are joined and sealed to the top and bottom sheets with the support means being located at those joins so that the top and bottom sheets are separately supported by the support means, and in that a pressure manifold system is provided to which each end of the open-ended hollow sleeve is joined and through which air is circulated to control the pressure within the panel, there being liquid feed means for delivering a liquid within the panel at the supported side of the panel having the higher elevation such that the liquid flows transversely to the circulated air flow.

Preferably, the manifold system forms part of a closed air circuit, including fans, precipitators, and heat exchangers which controls the pressure, temperature and humidity of the air circulating in the sleeve. To assist in the control of the environment within the sleeve, water and other liquids may be sprayed into the sleeve, to evaporate and provide cooling within the panel. The control of the environment within the panel may be incorporated with a climate control system within the building. Such a system can conserve energy and have ecological benefits by utilization of waste heat from industrial processes. The canopy system of the present invention can be used integrally with a system of controlling environment within a building for summer and winter operation.

Canopy systems are light-weight and economical especially when made of coated fabrics, however, they have certain limitations. They do not have the same strength as rigid materials and they must be stabilized against wind loads and other factors such as snow loads. Large area canopies are difficult to fabricate because they must be piece made requiring accurate cutting, sewing, and sealing of seams. When the canopies are completed, a large bulk of material results. Typical tent and dome-like canopy applications require the canopy to have a double curvature which does not lie flat when the canopy is folded or rolled for shipping. Furthermore, a system comprising a number of smaller area panels poses problems of forming weather tight connections at the site.

In the canopy system of the present invention, tubular panels are made in the form of a continuous sleeve which may be cut to length in the field and installed to the structure. There is no need to sew and seal seams, and the sleeve is delivered to the site in a roll. The material used for the sleeve of the present invention is either a flexible impervious film or fabric. The film may be extruded in a sleeve or tube and the fabric may be woven in a sleeve or tube.

The top exterior sheet of the hollow sleeve may be formed from material which allows the transmission of solar energy to the panel, and in another embodiment the bottom interior sheet may also be formed from material which allows transmission of the solar energy through the panel and inside the building structure. In a further embodiment the bottom interior sheet has a selected light transmission to suit the light requirements inside the building structure.

In a still further embodiment the hollow sleeve of the canopy system may be formed from a tubular film of thermoplastic material such as polyethylene or polyester. Alternatively the sheet material may be formed from a synthetic fabric having an impermeable coating thereon such as a loose plain woven polyester fabric with a flexible silicone coating. In one embodiment, a hose having a plurality of holes along its length is connected to the fabric material of the tubular sleeve at the side of the panel being at the higher elevation. The support means wherein the side walls are supported by the structure may comprise a cord at each of the joins woven into the fabric forming the tubular sleeve, each cord in turn is supported in a fluted slot which is part of the building structure.

A liquid drain pipe is located within the panel at its lowest elevation in an embodiment where a drain is required.

Either a positive pressure or a negative pressure may be maintained within the panel and in required situations an additional sheet may be located between the top exterior sheet and the bottom interior sheet to provide two hollow sleeves and therefore two pressurized spaces within the same panel.

The canopy system may be formed by a plurality of tubular panels supported side by side by the building structure. The sides at the higher elevation of adjacent panels may in one embodiment be contingent with each other and the sides at the lower elevation of adjacent panels may also be contingent with each other. The building structure has elements which support the sides at the higher elevation of adjacent panels and other elements which support the sides at the lower elevation of adjacent panels to form a roof with peaks and troughs. In another embodiment the side at the higher elevation of one panel is contingent with the side at the lower elevation of an adjacent panel. The building structure has elements each of which supports the side at the higher elevation of one panel and the side at the lower elevation of an adjacent panel to form a roof of constant slope in which the panels transverse the slope.

In drawings which illustrate embodiments of the invention,

Fig. 1 is a schematic elevational view of one embodiment of the canopy system according to the present invention.

Fig. 2 is a schematic elevational view of another embodiment of a canopy system on a building structure according to the present invention.

Fig. 3 is a sectional view of a building panel having a positive pressure therein.

Fig. 4 is a sectional view of a building panel having a negative pressure therein.

Fig. 5 is a sectional view of a building panel having an additional sheet to provide two hollow sleeves both of which have a positive pressure therein.

Fig. 6 is a sectional view of a building panel having an additional sheet to provide two hollow sleeves one of which has a positive pressure and the other a negative pressure therein.

Fig. 7 is a partial sectional view of the building structure shown in Fig. 1 illustrating the peak of the roof supporting the sides at the higher elevation of two panels.

Fig. 8 is a partial sectional view of the building structure shown in Fig. 1 illustrating the trough of the roof supporting the sides at the lower elevation of two panels.

Fig. 9 is an isometric view partly in cross section of a tubular panel according to one embodiment of the present invention.

Fig. 10 is a schematic elevational view of a closed air circuit for the manifold system at the ends of the tubular panels of a roof.

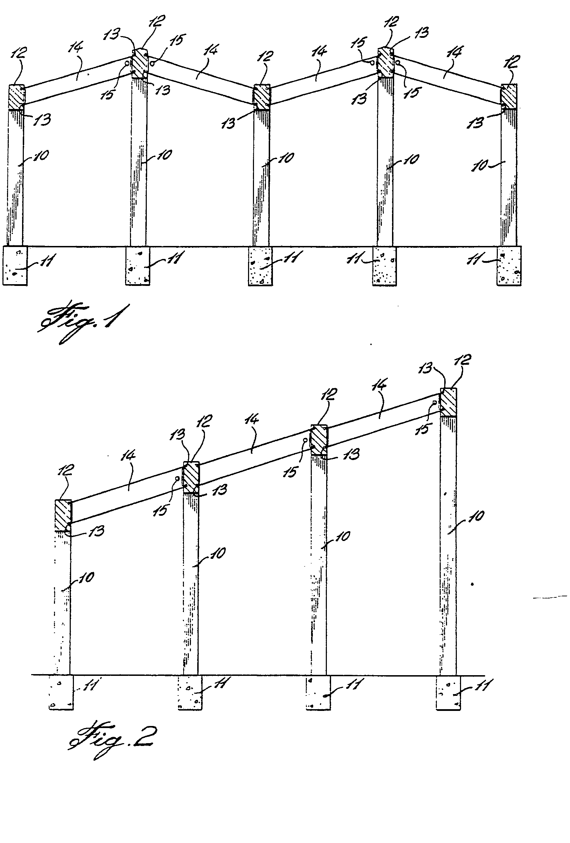

One embodiment of a building structure is shown in Fig. 1 wherein columns 10 having foundations 11 support special beam sections 12 which have connections 13, described in more detail hereinafter, for supporting tubular panels 14 between each beam section 12 as may be seen. The columns 10 are arranged so that every other supporting beam section 12 is at a higher elevation than the intermediate beam section, thus a roof is formed with peaks and troughs. At the peaks inside each panel 14 is a hose 15 which has a plurality of holes along its length to provide liquid into the interior of each panel. The liquid, preferably water, entering the panel either evaporates in the panel or alternatively flows to the lower side of each panel and consequently drains either into the manifold at the end of the tubular panel or alternatively a drain pipe may be provided at the lowest point inside the panel 14.

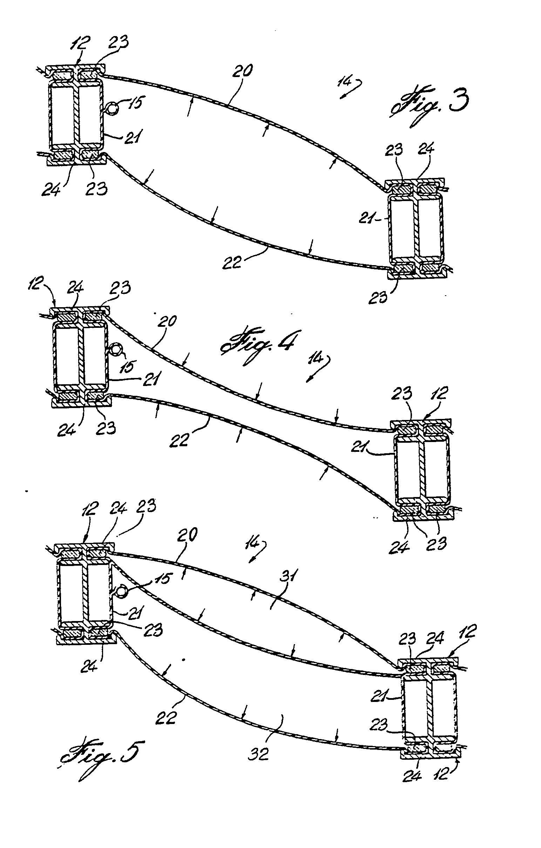

Fig. 2 shows another configuration of a building structure with columns 10 of increasing height and the supporting beam sections 12 at increased elevations so that the roof has a constant slope in which the panels transverse this slope. The hose 15 for supplying liquid to the inside of the panels 14 is provided at the side of the panel having the highest elevation so that liquid will flow to the lowest point in each panel 14. The building structure as illustrated in both Figs. 1 and 2 is not complete, trusses, cross-braces and other members would be required. The construction of the structure may be steel, concrete, wood or the like. The building structure itself does not form part of the present invention, however, the particular beam section 12 having the connection 13 to support the panel 14 is an integral part of the present invention and is described in more detail hereinafter.

The tubular panel may be formed from an extruded tubular film of thermoplastic material such as polyethylene or polyester and may be transparent. Other materials include the copolymers of tetrafluoroethylene and polypropylene (FEP), chlorotrifluoroethylene polymer, and other suitable polymers and copolymers of fluorocarbons. If the building is to be used as a greenhouse, then the top exterior sheet and the bottom interior sheet of the panels may both be transparent to allow light and ultraviolet rays to enter the building. In other uses the top exterior sheet may be transparent, and the bottom interior sheet of the panel may be coated to become translucent and thus allowing ultraviolet rays and light to act on the environment within the panel, but not to enter the building. Various degrees of transmission of light and ultraviolet rays through the bottom interior sheet may be obtained depending upon what is required inside the building. The type and thickness of coating on this bottom interior sheet may be varied depending on the requirements.

In another embodiment the tubular panel is made from synthetic fabric, it may be woven in a continuous tube and then coated to become impervious to weather and ultra violet ray degradation. The tube is made with two side walls, a top exterior surface and a bottom interior surface, the height of the side walls may vary from 8 to 18 inches and the width of the panel may be up to 10 feet or more. The tube may be made in continuous lengths. The limitation only being the shipping as the tube may be rolled up and weight may become the limiting factor.

Other fabric materials suitable for manufacturing hollow sleeves may be made from glass fibers, metal fibers, fluorocarbon fibers, graphite fibers and saran fibers. Other suitable coating materials for fabrics include fluorocarbons and saran.

Bright polyester yarns in a scrim or a loose plain woven polyester fabric may be used with a clear coating resin preferably a silicone coating resin to provide a high light transmission value through the panel into the building. If a lower level of natural illumination is desired then the lower interior sheet is coated with a light absorbing material. Natural lighting in a work or recreational environment requires transmission of 8% to 16% of sunlight while food crop production requires the maximum possible transmission up to 80%.

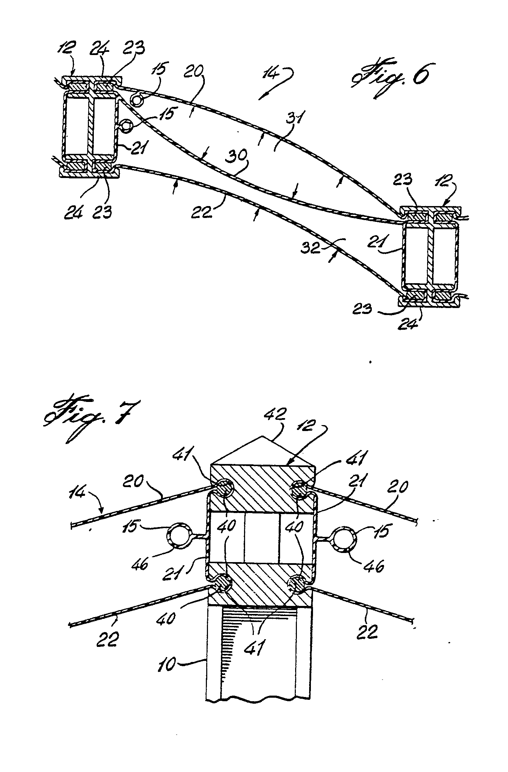

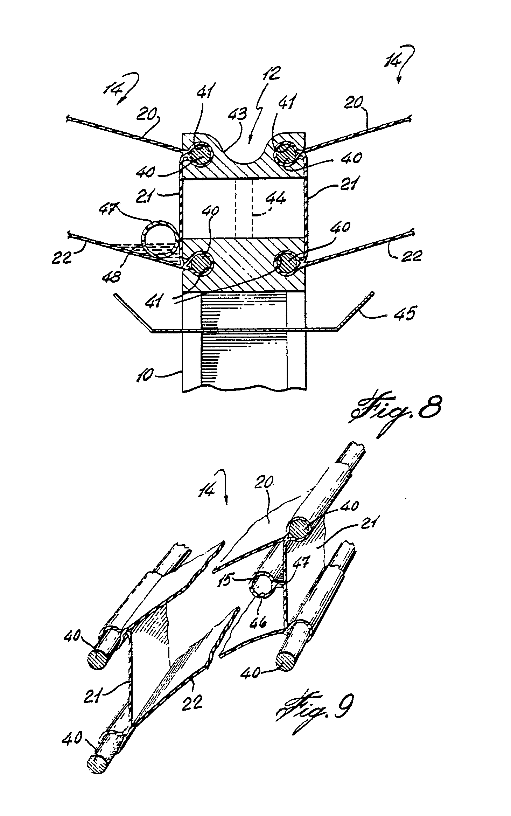

The impermeable coating is a weatherable exterior finish and an interior vapor barrier. Fig. 3 shows one embodiment of a building panel 14 with a top exterior sheet 20, two side walls 21 and a bottom interior sheet 22. The panel 14 is supported by the beam sections 12, in four locations, two to each beam section at the joins between the side walls 21 and the top sheet 20 and bottom sheet 22. In the case of a tubular film this so called "join" represents the four locations where the panel 14 is supported by the beam sections 12. Such a "join" is not apparent when the tubular film is made as generally no seams are made in a tubular film. The "joins" are only defined after installation to define the sidewalls 21, top sheet 20 and bottom sheet 22. Fig. 3 shows rectangular corner bars 23 which extend within the top and bottom flanges of a channel section 24 and are held rigidly in place at each end to support the panel 14 at the four "joins" between the two beams 12. A hose 15 is shown at the side of the panel with the highest elevation. Jets or holes (not shown) are provided along the hose 15 so that liquid can be sprayed into the interior of the panel. Fig. 3 illustrates a panel having a positive pressure therein, that is, a pressure above atmospheric pressure, so that the walls 21, top sheet 20 and bottom sheet 22 bulge outwards. Fig. 4 on the other hand illustrates a panel having a negative pressure, or a pressure below atmospheric pressure, therein with the walls 21 top sheet 20 and bottom sheet 22 collapsed inwards, but having sufficient tension in the sheets so that they do not touch or restrict flow in the panel.

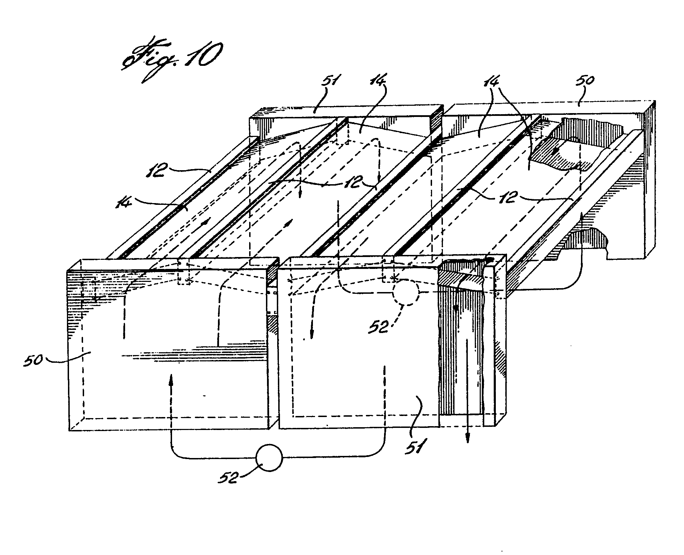

The panels 14 illustrated in Fig. 5 and Fig. 6 have an intermediate sheet 30 which divides the panel into two sealed compartments or hollow sleeves, a top sleeve 31 and a bottom sleeve 32. Fig. 5 illustrates both sleeves having a positive pressure therein. Fig. 6 illustrates the top sleeve 31 having a positive pressure therein and the bottom sleeve 32 having a negative pressure therein. Fig. 5 illustrates a liquid feed hose 15 in the bottom sleeve 32 only. Fig. 6 illustrates a liquid feed hose 15 in both hollow sleeves.

The environment within the panel is controlled depending on the requirements inside the building. Pressure, temperature and humidity are all factors which can be controlled. In winter, heat may be supplied to the panel; in the summer heat can be removed from the hollow sleeve. Liquid, preferably water, can be evaporated within the hollow sleeve to remove heat. The evaporation occurs either at a positive pressure or a negative pressure depending on the temperature required. In one embodiment foam is injected from one end of the panel or alternatively may be produced by spraying a liquid under pressure through jets or holes in the hose 15 inside the panel. The foam improves the insulation within the panel. When two hollow sleeves are provided in a panel, foam may be injected into one sleeve to improve the insulation, and the other sleeve can have air circulating therein to control heat within the building.

One example of a connection between a panel 14 and a connecting beam section 12 of a building is illustrated in Figs. 7 and 8. Fig. 7 shows a peak connection for the building system shown in Fig. 1 wherein panels made of a woven fabric coated with an impervious coating have cords 40 sewn into the fabric or woven into the fabric at the joins between the top exterior sheet 20 and the side walls 21 and the bottom interior sheet 22 and the side walls 21. These cords 40 slide into fluted slots 41 which extend right along the connecting beam section 12 and hold the panel 14 to the building structure. The fluted slots 41 have a smooth interior to allow the cords 40 to be slid in place. The material surrounding the slots 41 may be plastic or metal but must have no sharp edges so that the panel material moves freely therein without catching or tearing. A cap 42 is provided on the peak of the building structure to drain the water from rain and the like. Similarly, a groove 43 with a drain 44 is provided in the trough as illustrated in Fig. 8 and the gutter 45 is provided beneath the trough to catch water from the roof. A hose 15 for liquid such as water, to spray into the panel is provided at the side having the higher elevation. The hose 15 is joined to the side wall 21 and has a plurality of jets or holes 46 along the length. Fig. 8 illustrates a drain pipe 47 having drain holes 48 therein. The drain pipe is not an essential feature of the canopy system, natural drainage to each end of the panel may be used. However, the drain pipe is used in long panels with a suction pump to pump out liquid along the length of the panel. Alternatively, a positive pressure within the panel forces liquid out through the drain.

Fig. 9 illustrates one embodiment of a panel such as that shown in Figs. 7 and 8, with cords 40 woven into the fabric of the sleeve at each join between the sidewalls 21, and the top sheet 20 and bottom sheet 22. The hose 15 has a fabric link 49 to the sidewall 21.

Four panels 14 are illustrated in Fig. 10 similar to the roof configuration shown in Fig. 1 and having inlet manifolds 50 for two panels 14 and outlet manifolds 51 for two panels 14. A closed circuit air system is supplied where air to a first inlet manifold 50 passes through two of the panels 14 into a first outlet manifold 51 from whence the air passes in a closed circuit system 52 including a fan, a heat exchanger and a precipitator. The system ensures the required temperature, pressure and humidity of the air which then feeds into a second inlet manifold 50 on the same side as the first outlet manifold 50 and through the panels 14 to a second outlet manifold 51 and again through another closed circuit system 52 where the temperature, pressure and humidity are controlled, before feeding back into the first inlet manifold 50. Thus the closed air system is able to control the pressure of the air entering the panel, the moisture content of the air within the panel, and the temperature of the air within the panel. Liquid may be sprayed into the panel through the hose 15 to provide cooling, or alternatively foam may be generated to fill the panels of the canopy system by entrainment of the air within the panel with the liquid sprayed into the panel either through the hose 15 or in short panels from the inlet manifold end. Upon ceasing to be generated the foam can be destroyed either by blowing through the panel from the inlet manifold, or spraying with a foam dissolving liquid from the hose 15. The temperature control, humidity control, foaming insulation control and pressure control of the system does not form part of the present invention.

Various changes may be made to the particular details of the connection between the panel and the connection beam sections of the building structure. The panel is supported at four corners such that if there is a negative pressure within the panel the top sheet and the bottom sheet do not touch each other or prevent the movement of air through the panel from end to end. The pressure, either negative or positive, has to be arranged so that it is feasible for operation of the panel. Too high a pressure would result in the possibility of leaks occurring as would too low a pressure. Other changes to the canopy system may be made without departing from the scope of the present invention which is limited only by the claims.

## Claims

1. A canopy system for a building structure comprising at least one tubular panel (14) formed of flexible impermeable sheet material, the panel including an open-ended hollow sleeve with a top exterior sheet (20) and a bottom interior sheet (22) which extend between spaced-apart support means (12, 24) one of which is at a higher elevation than the other, characterised in that the sleeve has two side walls (21) which are joined and sealed to the top and bottom sheets (20, 22) with the support means (12, 24) being located at those joins so that the top and bottom sheets are separately supported by the support means, and in that a pressure manifold system (50, 51) is provided to which each end of the open-ended hollow sleeve is joined and through which air is circulated to control the pressure within the panel, there being liquid feed means (15) for delivering a liquid within the panel at the supported side of the panel having the higher elevation such that the liquid flows transversely to the circulated air flow.

2. A canopy system according to claim 1, characterised in that the manifold system (50, 51) at each end of the hollow sleeve forms part of a closed air circuit (52) and includes air moving means, heat exchanger means and precipitator means within the manifold system.

3. A canopy system according to claim 1 or claim 2, characterised in that the top exterior sheet (20) of the hollow sleeve is formed from material which allows the transmission of solar energy into the panel.

4. A canopy system according to any one of claims 1—3, characterised in that the top exterior sheet (20) and the bottom interior sheet (22) of the hollow sleeve are formed from material which allows the transmission of solar energy into the panel and inside the building structure.

5. A canopy system according to claim 4, characterised in that the bottom interior sheet (22) of the hollow sleeve is formed from material having a selected light transmission to suit the light requirements inside the building structure.

6. A canopy system according to any one of claims 1—3, characterised in that the hollow sleeve is formed from a tubular film of polyethylene, polyester, or a polymer or copolymer of a fluorocarbon.

7. A canopy system according to claim 1, characterised in that the sheet material is a synthetic fabric having an impermeable coating thereon.

8. A canopy system according to claim 7, characterised in that the synthetic fabric is a loose plain woven polyester fabric with a flexible silicone coating thereon.

9. A canopy system according to claim 7 or claim 8, characterised in that the liquid feed means is a hose (15) having a plurality of holes along its length and is connected to the fabric at the side of the panel being at the higher elevation.

10. The canopy system according to claim 7 or claim 8, characterised in that the support means of the joins between the side walls and the top and bottom sheets comprises a cord (40) at each of the joins woven into the fabric adapted to be held in fluted slots (41) forming part of the building structure.

11. A canopy system according to any one of claims 1, 2 or 7, characterised in that a liquid drain pipe (44) is located within the panel at its lowest elevation.

12. A canopy system according to any one of claims 1, 2 or 7, characterised in that a positive pressure is maintained within the panel.

13. A canopy system according to any one of claims 1, 2 or 7, characterised in that a negative pressure is maintained within the panel.

14. A canopy system according to claim 1, characterised in that at least one additional sheet (30) is provided between the top exterior sheet and the bottom interior sheet, the additional sheet being joined and sealed to the sides of the panel to form at least two hollow sleeves.

15. A canopy system according to claim 1, characterised in that a plurality of tubular panels are supported side by side by the building structure.

16. A canopy system according to claim 15, characterised in that the sides (21) at the higher elevation of adjacent panels are contingent with each other, the sides (21) at the lower elevation of adjacent panels are contingent with each other, and the building structure has elements (12) which support the sides at the higher elevation of adjacent panels and other elements (12) which support the sides at the lower elevation of adjacent panels to form a roof with peaks and troughs.

17. A canopy system according to claim 15, characterised in that the side at the higher elevation of one panel is contingent with the side at the lower elevation of an adjacent panel and the building structure has elements (12) each one of which supports the side at the higher elevation of one panel and the side at the lower elevation of an adjacent panel to form a roof of constant slope in which the panels transverse the slope.

**Patentansprüche**

1. Baldachinsystem für einen Gebäudeaufbau, bestehend aus wenigstens einem Hohlfeld (14), das aus einem flexiblen undurchlässigen Bahnmaterial gebildet ist, wobei das Feld eine hohle offenendige Kammer mit einer oberen Außenbahn (20) und einer unteren Innenbahn (22) aufweist, die sich zwischen voneinander beabstandeten Halteeinrichtungen (12, 24) erstrecken, von denen eine sich auf einer größeren Höhe als die anderen befindet, dadurch gekennzeichnet, daß die Hülse zwei Seitenwandungen (21) aufweist, die mit der oberen Außenbahn und der unteren Innenbahn (20, 22) verbunden und an diesen abgedichtet sind, wobei die Halteeinrichtungen (12, 24) an diesen Verbindungsstellen derart angeordnet sind, daß die obere und die untere Bahn von den Halteeinrichtungen getrennt gehalten werden, und daß ein Druckluftverteilsystem (50, 51) vorgesehen ist, an daß jedes Ende der offenendigen hohlen Kammer angeschlossen ist und durch das Luft umgewälzt wird, um den Druck innerhalb des Feldes zu kontrollieren, wobei eine Flüssigkeitszuführeinrichtung (15) für das Einführen einer Flüssigkeit in das Feld an der die größere Höhe aufweisenden gehaltenen Seite des Feldes derart vorgesehen ist, daß die Flüssigkeit quer zu der umgewälzten Luft strömt.

2. Baldachinsystem nach Anspruch 1, dadurch gekennzeichnet, daß das Druckverteilersystem (50, 51) an jedem Ende der hohlen Kammer einen Teil eines geschlossenen Luftkreislaufs (52) bildet und Luftbewegungseinrichtungen, Wärmetauschereinrichtungen und Abscheideeinrichtungen innerhalb des Druckluftverteilersystems aufweist.

3. Baldachinsystem nach Anspruch 1 oder 2, dadurch gekennzeichnet, daß die obere Außenbahn (20) der hohlen Kammer aus einem Material gebildet ist, das die Übertragung von Sonnenenergie in das Feld ermöglicht.

4. Baldachinsystem nach einem der Ansprüche 1 bis 3, dadurch gekennzeichnet, daß die obere Außenbahn (20) und die untere Innenbahn (22) der hohlen Kammer aus einem Material gebildet sind, das die Übertragung von Sonnenenergie in das Feld und ins Innere des Gebäudeaufbaues ermöglicht.

5. Baldachinsystem nach Anspruch 4, dadurch gekennzeichnet, daß die untere Innenbahn (22) der hohlen Kammer aus einem Material gebildet ist, das eine ausgewählte Lichtdurchlässigkeit zur Anpassung der Lichtbedürfnisse im Innern des Gebäudeaufbaues besitzt.

6. Baldachinsystem nach einem der Ansprüche 1 bis 3, dadurch gekennzeichnet, daß die hohle Kammer aus einem hohlen Film aus Polyethylen, Polyester oder einem Polymer oder Copolymer eines Fluorkohlenstoffs gebildet ist.

7. Baldachinsystem nach Anspruch 1, dadurch gekennzeichnet, daß das Bahnmaterial aus einem synthetischen Gewebe mit einer darauf vorgesehenen undurchlässigen Beschichtung besteht.

8. Baldachinsystem nach Anspruch 7, dadurch gekennzeichnet, daß das synthetische Gewebe aus einem beweglichen glattgewebten Polyestergewebe mit einer darauf befindlichen flexiblen Silikonbeschichtung besteht.

9. Baldachinsystem nach Anspruch 7 oder 8, dadurch gekennzeichnet, daß die Flüssigkeitszuführeinrichtung aus einem Schlauch (15) besteht, der längs seiner Länge eine Vielzahl von Löchern besitzt und mit dem Gewebe an der auf der größeren Höhe liegenden Seite des Feldes verbunden ist.

10. Baldachinsystem nach Anspruch 7 oder 8, dadurch gekennzeichnet, daß die Halteeinrichtung der Verbindungen zwischen den Seitenwandungen und der oberen und der unteren Bahn an jeder Verbindung einen in das Gewebe eingewebten Cord (40) aufweist, der in genuteten Schlitzen (41) haltbar ist, die einen Teil des Gebäudeaufbaues bilden.

11. Baldachinsystem nach einem der Ansprüche 1, 2 oder 7, dadurch gekennzeichnet, daß ein Flüssigkeitsabführrohr (44) innerhalb des Feldes an seiner niedrigsten Höhe angeordnet ist.

12. Baldachinsystem nach einem der Ansprüche 1, 2 oder 7, dadurch gekennzeichnet, daß innerhalb des Feldes ein positiver Druck aufrechterhalten wird.

13. Baldachinsystem nach einem der Ansprüche 1, 2 oder 7, dadurch gekennzeichnet, daß innerhalb des Feldes ein negativer Druck aufrechterhalten wird.

14. Baldachinsystem nach Anspruch 1, dadurch gekennzeichnet, daß wenigstens eine Zusatzbahn (30) zwischen der oberen Außenbahn und der unteren Innenbahn vorgesehen ist, wobei die Zusatzbahn mit den Seiten des Feldes zur Bildung wenigsten zweier hohler Kammern verbunden und abgedichtet ist.

15. Baldachinsystem nach Anspruch 1, dadurch gekennzeichnet, daß eine Vielzahl von hohlen Kammern seitlich aneinander von dem Gebäudeaufbau gehalten werden.

16. Baldachinsystem nach Anspruch 15, dadurch gekennzeichnet, daß die Seiten (21) in größerer Höhe aneinandergrenzender Felder miteinander verbunden sind, daß die Seiten (21) in niedrigerer Höhe aneinandergrenzender Felder miteinander verbunden sind und daß der Gebäudeaufbau Elemente (12), die die Seiten in größerer Höhe aneinandergrenzender Felder hält, und andere Elemente (12) aufweist, die die Seiten in niedrigerer Höhe aneinandergrenzender Felder halten, um ein Dach mit Spitzen und Mulden zu bilden.

17. Baldachinsystem nach Anspruch 15, dadurch gekennzeichnet, daß die Seite an der größeren Höhe eines Feldes mit der Seite an der niedrigeren Höhe eines angrenzenden Feldes verbunden ist, und daß der Gebäudeaufbau Elemente (12) besitzt, von denen jedes die Seite an der größeren Höhe eines Feldes und die Seite an der niedrigeren Höhe eines angrenzenden Feldes zur Bildung eines Dachs mit konstanter Neigung hält, bei dem die Felder quer über die Neigung verlaufen.

**Revendications**

1. Couverture pour une structure de bâtiment comprenant au moins un panneau tubulaire (14) formé d'une matière en feuille imperméable flexible, le panneau comportant une gaine creuse ouverte aux extrémités et pourvue d'une feuille extérieure supérieure (20) et d'une feuille intérieure inférieure (22) qui s'étendent entre des moyens de support (12, 24) espacés mutuellement et dont l'un est situé à un niveau plus élevé que l'autre, caractérisée en ce que la gaine comporte deux parois latérales (21) qui sont réunies et scellées aux feuilles supérieure et inférieure (20, 22), les moyens de support (12, 24) étant placés dans ces zones de jonction de telle sorte que les feuilles supérieure et inférieure soient supportées séparément par les moyens de support, et en ce qu'il est prévu un système distributeur de pression (50, 51) auquel chaque extrémité de la gaine creuse ouverte à ses extrémités est réunie et dans lequel de l'air est amené à circuler pour contrôler la pression régnant à l'intérieur du panneau, un moyen d'alimentation en liquide (15) étant prévu pour débiter un liquide dans le panneau sur le côté supporté de ce dernier se trouvant au niveau le plus élevé de telle sorte que le liquide s'écoule transversalement à l'écoulement d'air en circulation.

2. Une couverture selon la revendication 1, caractérisée en ce que le système distributeur (50, 51) prévu à chaque extrémité de la gaine creuse fait partie d'un circuit d'air fermé (52) et comprend un moyen d'entraînement d'air, un moyen d'échange de chaleur et un moyen de précipitation placés à l'intérieur du système distributeur.

3. Une couverture selon la revendication 1 ou la revendication 2, caractérisée en ce que la feuille extérieure supérieure (20) de la gaine creuse est formée d'une matière permettant la transmission d'énergie solaire vers l'intérieur du panneau.

4. Une couverture selon une quelconque des revendications 1 à 3, caractérisée en ce que la feuille extérieure supérieure (20) et la feuille intérieure inférieure (22) de la gaine creuse sont formées d'un matériau permettant la transmission d'énergie solaire vers l'intérieur du panneau et à l'intérieur de la structure de bâtiment.

5. Une couverture selon la revendication 4, caractérisée en ce que la feuille intérieure inférieure (22) de la gaine creuse est formée d'un matériau ayant une transmittance de lumière choisie de façon à s'adapter aux impératifs d'éclairement à l'intérieur de la structure de bâtiment.

6. Une couverture selon une quelconque des revendications 1 à 3, caractérisée en ce que la gaine creuse est formée d'un film tubulaire de polyéthylène, de polyester ou d'un polymère ou copolymère d'un fluorocarbone.

7. Une couverture selon la revendication 1, caractérisée en ce que la matière en feuille est un tissu synthétique sur lequel est prévu un revêtement imperméable.

8. Une couverture selon la revendication 7, caractérisée en ce que le tissu synthétique est un tissu en polyester à texture simple lâche sur lequel est prévu un revêtement souple en silicone.

9. Une couverture selon la revendication 7 ou la revendication 8, caractérisée en ce que le moyen d'alimentation en liquide est un tuyau souple (15) comportant une pluralité de trous répartis sur sa longueur et relié au tissu sur le côté du panneau qui est placé au niveau le plus élevé.

10. La couverture selon la revendication 7 ou la revendication 8, caractérisée en ce que les moyens de support des joints entre les parois latérales et les feuilles supérieure et inférieure comprennent un cordon (40) à chacun des joints, tissé dans le tissu et apte à être maintenu dans des évidements à fente (41) faisant partie de la structure de bâtiment.

11. Une couverture selon une quelconque des revendications 1, 2 ou 7, caractérisée en ce qu'un tube de drainage de liquide (44) est placé à l'intérieur du panneau à son niveau le plus bas.

12. Une couverture selon une quelconque des revendications 1, 2 ou 7, caractérisée en ce qu'une pression positive est maintenue à l'intérieur du panneau.

13. Une couverture selon une quelconque des revendications 1, 2 ou 7, caractérisée en ce qu'une pression négative est maintenue à l'intérieur du panneau.

14. Une couverture selon la revendication 1, caractérisée en ce qu'au moins une feuille additionnelle (30) est prévu entre la feuille extérieure supérieure et la feuille intérieure inférieure, la feuille additionnelle étant réunie et scellée aux côtés du panneau pour former au moins deux gaines creuses.

15. Une couverture selon la revendication 1, caractérisée en ce qu'une pluralité de panneaux tubulaires sont supportés côte à côte par la structure de bâtiment.

16. Une couverture selon la revendication 15, caractérisée en ce que les côtés (21) situés au niveau le plus élevé de panneaux adjacents sont placés mutuellement en correspondance, les côtés (21) situés au niveau bas de panneaux adjacents sont placés mutuellement en correspondance, et la structure de bâtiment comporte des éléments (12) qui supportent les côtés de niveau le plus élevé de panneaux adjacents et d'autres éléments (12) qui supportent les côtés de niveau le plus bas de panneaux adjacents afin de former une toiture comportant des sommets et des creux.

17. Une couverture selon la revendication 4, caractérisée en ce que le côté situé au niveau le plus élevé d'un panneau est placé en correspondance au côté situé au niveau le plus bas d'un panneau adjacent et la structure de bâtiment comporte des éléments (12) qui supportent chacun le côté de niveau le plus élevé d'un panneau et le côté de niveau le plus bas d'un panneau adjacent afin de former une toiture de pente constante dans laquelle les panneaux s'étendent transversalement la pente.

*Fig.1*

*Fig.2*

*Fig. 3*

*Fig. 4*

*Fig. 5*

*Fig. 6*

*Fig. 7*

0 106 920

Fig.8

Fig.9

4

Fig. 10